# EUROPEAN PATENT APPLICATION

(11) **EP 3 208 488 A1**
(43) Date of publication of application: **23.08.2017**
(21) Application number: 14904031.3
(22) Date of filing: 14.11.2014
(51) Int. Cl.: F16F 9/00

(54) **ARTICULATED SYSTEM-BASED HYDRAULIC BUFFER FOR REALIZING SAFE TURN-BACK OF VEHICLE, AND METHOD THEREFOR**

(30) Priority: 16.10.2014 CN 201410546135; 07.11.2014 CN 201410624557
(71) Applicant: Jointech (Suzhou) Vehicle System Co., Ltd., Suzhou, Jiangsu 215211 (CN)
(72) Inventor: HAO, Qingjun, Suzhou Jiangsu 215211 (CN); TAN, Xiaoliang, Suzhou Jiangsu 215211 (CN); SU, Xianjin, Suzhou Jiangsu 215211 (CN); LI, Dashan, Suzhou Jiangsu 215211 (CN); WEI, Weishang, Suzhou Jiangsu 215211 (CN); WANG, Xiaobao, Suzhou Jiangsu 215211 (CN); ZHAO, Jianwei, Suzhou Jiangsu 215211 (CN)
(74) Representative: London IP Ltd
(86) International application number: PCT/CN2014/091079
(87) International publication number: WO 2016/058236

(57) **Abstract**

The invention relates to a hydraulic buffer that can enable the articulated vehicle to gyre safely based on the articulated system, comprising the basic damping oil circuit and boost control oil circuit, which are connected in parallel, forming articulated damping pressure control oil circuit; an oil return circuit is arranged between the articulated damping pressure control oil circuit and the oil storage tank; the second oil absorption circuit is arranged between the oil storage tank and the rod port; the oil circuit for safe lock-up is arranged between the rod port and the oil return circuit; the reversing assembly is arranged in the second oil pressing circuit; besides, the invention further provides a method that can enable the articulated vehicle to gyre safely through the above hydraulic buffer; by adopting the hydraulic buffer that can enable a vehicle to gyre safely based on the articulated system as well as its method, the vehicle can gyre lightly and quickly, is avoided from towing during the gyration and drifting after being set right; meanwhile, when the vehicle suffers an accident, the vehicle can maintain the shape of accident, avoiding greater damage, with wider range of application.

## Description

### Technical Field

The invention relates to the technical field of articulated bus; specifically, it refers to a hydraulic buffer realizing safe gyration of vehicles based on the articulated system and its method.

### Background Art

Generally, an articulated vehicle comprises two carriages, the front carriage is connected to the rear carriage via the chassis articulated system, and the chassis articulated system comprises a front frame, a rear frame, a turntable bearing and hydraulic buffers providing damping; the front frame is fixedly connected to the front carriage via the front beam, the rear frame is fixedly connected to the rear carriage via the rear beam, a hydraulic buffer arranged respectively on the right and left side is connected between the front frame and rear frame of the articulated system; when the vehicle makes a turn during the drive, the front carriage and rear carriage will drive the front frame and rear frame of the articulated system to make relative rotation; and in the rotation process, the proximity switch can be triggered, which is arranged between the front frame and rear frame of the articulated system, and connected with the electric control system of the vehicle.

In the existing technology, the damping torque of an articulated vehicle in both the state of turning and gyration is identical; as a result, it is easy for the vehicle to tow other vehicles and drift inertially towards the opposite direction.

### Contents of the Invention

The invention intends to solve the above weaknesses of the existing technology, so as to provide a hydraulic buffer, that can increase damping torque with the increase of angle or speed of the vehicle during the turning process of the vehicle, and gradually increase damping torque with the decrease of angle or speed of the vehicle during the gyration process of the vehicle, realizing safe gyration of the vehicle based on the articulated system as well as its method.

To achieve the above purpose, the hydraulic buffer realizing safe gyration of vehicles based on the articulated system and its method of the invention is described as follows:
The hydraulic buffer realizing safe gyration of vehicles based on the articulated system mainly features that, the said hydraulic buffer comprises a piston assembly, a cylinder barrel assembly and an oil storage tank; the said piston assembly is arranged in the said cylinder barrel assembly, and the said piston assembly separates the corresponding cylinder barrel into a rod port and a head port; wherein, the said hydraulic buffer further comprises a hydraulic control oil circuit, the said cylinder barrel assembly, the said hydraulic control oil circuit and the said oil storage tank are fixedly connected in sequence, and the said hydraulic control oil circuit comprises a first oil absorption circuit, a second oil absorption circuit, a first oil pressing circuit, a second oil pressing circuit, a basic damping oil circuit, an oil circuit for enhancing damping, an oil circuit for safe lock-up, and a reversing assembly, where:
   The said basic damping oil circuit and the boost control oil circuit are connected in parallel, constituting articulated damping pressure control oil circuit;
   The said first oil absorption circuit is arranged between the said oil storage tank and the said head port;
   The said second oil absorption circuit is arranged between the said oil storage tank and the said rod port;
   The said first oil pressing circuit is arranged between the said head port and the said articulated damping pressure control oil circuit;
   The said second oil pressing circuit is arranged between the said rod port and the said articulated damping pressure control oil circuit;
   An oil return circuit is arranged between the said articulated damping pressure control oil circuit and the said oil storage tank;
   The said oil circuit for safe lock-up is arranged between the said rod port and the said oil return circuit;
   The said reversing assembly is arranged in the said second oil pressing circuit.

Further, the said reversing assembly is a mechanical valve, and the said mechanical valve is arranged on the said piston assembly.

Furthermore, the said piston assembly comprises a piston and a piston rod, the said mechanical valve comprises a mechanical valve spring and a mechanical valve baffle, the first end of the said mechanical valve spring is fixed to the said piston, the second end of the said mechanical valve spring is connected with the said mechanical valve baffle, and both of the said mechanical valve spring and mechanical valve baffle are sheathed on the said piston rod.

Furthermore, the said cylinder barrel assembly comprises a manifold block; the said articulated damping pressure control oil circuit, second oil absorption circuit, second oil pressing circuit and oil circuit for safe lock-up are integrated in the said manifold block; the said manifold block is further arranged with an oil passing groove and an oil inlet articulated with the rod port, interior of the said oil passing groove is opened with an oil inlet for safe lock-up and a second oil inlet for oil absorption.

Further, the said first oil absorption circuit comprises first check valves, the said second oil absorption circuit comprises a fourth check valve, the said first oil pressing circuit comprises a second check valve, and the said second oil pressing circuit comprises a third check valve.

Furthermore, the said reversing assembly is a solenoid valve, arranged between the said third check valve and the said articulated damping pressure control oil circuit.

Furthermore, the said basic damping oil circuit comprises a basic hydraulic damping and a basic solenoid valve, the said boost control oil circuit comprises an overflow enhancement valve or a hydraulic enhancement damping, and the said oil circuit for safe lock-up comprises a safety-relief valve.

Furthermore, the said articulated system comprises a proximity switch, a front frame and a rear frame; the said proximity switch is arranged between the said front frame and the said rear frame, and connected with the electric control system of the vehicle; the said electric control system of the vehicle is used for sending basic solenoid valve control instruction to the said articulated system according to the trigger signal sent by the said proximity switch.

Besides, the invention further provides a method of realizing safe gyration of an articulated vehicle through the above hydraulic buffer, mainly featuring that, the said method comprises the following steps:
(1) The said articulated system judges whether the said articulated vehicle is in the state of making a turn or gyring, if it is in the state of making a turn, continue Step (2); if it is in the state of gyring, continue Step (5);
(2) The said electric control system of the vehicle judges whether trigger signal of the said proximity switch is received, if so, continue Step (3); otherwise, continue Step (2);
(3) The said electric control system of the vehicle sends basic solenoid valve control instruction to the said articulated system;
(4) The said articulated system controls the said basic solenoid valve to disconnect, and return to the above Step (1);
(5) The said articulated system judges whether the turning angle of the articulated vehicles falls within the first setting angle, if so, continue Step (6); otherwise, continue Step (7);
(6) The said electric control system of the vehicle maintains the connected state of the said basic solenoid valve, and the said hydraulic buffer provides basic damping;
(7) The said electric control system of the vehicle judges whether to send the basic solenoid valve control instruction to the said articulated system, if so, continue Step (8); otherwise, continue Step (10);
(8) The said electric control system of the vehicle sends basic solenoid valve control instruction to the said articulated system;
(9) The said articulated system controls the said basic solenoid valve to disconnect, and return to the above Step (1);
(10) The said electric control system of the vehicle maintains the connected state of the said basic solenoid valve.

Further, the said electric control system of the vehicle judges whether to send the basic solenoid valve control instruction to the said articulated system, specifically:
The said electric control system of the vehicle judges whether trigger signal and reversing signal of the said proximity switch are received, if so, the said electric control system of the vehicle determines to send the said basic solenoid valve control instruction to the said articulated system; otherwise, the said electric control system of the vehicle will not send basic solenoid valve control instruction to the said articulated system.

Further, the said electric control system of the vehicle judges whether to send the basic solenoid valve control instruction to the said articulated system, specifically:
The said electric control system of the vehicle judges whether any one of the braking signal, travel speed upper limit trigger signal or emergency switch button trigger signal is received, if so, the said electric control system of the vehicle determines to send the said basic solenoid valve control instruction to the said articulated system; otherwise, the said electric control system of the vehicle will not send basic solenoid valve control instruction to the said articulated system.

A hydraulic buffer realizing safe gyration of vehicles based on the articulated system and its method in the invention are adopted; when the vehicle is making a turn, damping torque will increase with the increase of angle or speed of the vehicle, according to the vehicle's requirement for buffer damping, assuring that the vehicle will not drift during the drive; after a turn is made and the vehicle is required to gyre and go straight ahead, the hydraulic buffer will increase the damping torque gradually with the decrease of angle or speed of the vehicle, so that the vehicle can gyre lightly and quickly, enabling the vehicle to avoid towing after making a turn and during the gyration, as well as drifting after setting right; meanwhile, when there is a traffic accident, the vehicle can maintain the shape when the accident occurs, avoiding more damage; and compared with the existing technology, it is more secure, and drivers will feel more comfortable during the driving.

Besides, when the piston rod in the rod port of the hydraulic buffer stretches out for a specific length, the mechanical valve baffle will block the oil inlet articulated with the rod port on the manifold block, hydraulic oil can enter the oil inlet for safe lock-up and the oil inlet of the second oil suction via the oil passing groove; therefore, when the vehicle turns to certain angle, damping force of the hydraulic buffer whose rod port is compressed is provided by the oil circuit for safe lock-up.

Meanwhile, the articulated damping pressure control oil circuit adopts hydraulic damping as the ordinary state, and overflow valve as the pressurization state. Such configuration has made full utilization of the characteristic that differential pressure produced by hydraulic damping is directly proportional to the excess flow of hydraulic oil, namely, under the normal state, articulated damping is directly proportional to vehicle turn rate; when damping is required to be enhanced within the relatively small rotation angle, raise the damping pressure to a higher and relatively constant value; therefore, hydraulic damping and overflow valve, rather than proportional overflow valve (or proportional pressure-reducing valve) is applied to gain damping pressure; thus, fabricating cost of hydraulic buffer as well as the complexity of electric control are reduced. Besides, the articulated damping pressure control oil circuit adopts the form of parallel connection of overflow valve and hydraulic damping. The overflow valve is connected with the hydraulic damping in parallel; when the oil circuit suffers hydraulic shock, and pressure increases suddenly, the overflow valve can be opened to relieve pressure, pressure shock can be reduced; meanwhile, noise produced due to excessive instant excess flow of hydraulic damping can be reduced.

### Description of Figures

Figure 1 shows a structural drawing of the hydraulic buffer that can realize safe gyration of vehicles based on the articulated system of the invention.
Figure 2 shows a structural drawing of the first kind of hydraulic control oil circuit of the hydraulic buffer that can realize safe gyration of vehicles based on the articulated system of the invention.
Figure 3 shows a structural drawing of the cylinder barrel assembly and piston assembly of the hydraulic buffer that can realize safe gyration of vehicles based on the articulated system of the invention.
Figure 4 shows a structural drawing of the second kind of hydraulic control oil circuit of the hydraulic buffer that can realize safe gyration of vehicles based on the articulated system of the invention.
Figure 5 shows a structural drawing of the third kind of hydraulic control oil circuit of the hydraulic buffer that can realize safe gyration of vehicles based on the articulated system of the invention.
Figure 6 shows a structural drawing of the mechanical valve of the hydraulic buffer that can realize safe gyration of vehicles based on the articulated system of the invention.
Figure 7 shows a structural drawing of the manifold block of the hydraulic buffer that can realize safe gyration of vehicles based on the articulated system of the invention.
Figure 8 shows an overall structural drawing of the hydraulic buffer that can realize safe gyration of vehicles based on the articulated system of the invention.

Including:
- 1: Front frame
- 2: Rear frame
- 3: Cylinder barrel assembly
- 31: Cylinder barrel
- 32: Rear end cover
- 33: Pressing pipe
- 34: Manifold block
- 341: Oil passing groove
- 342: Oil inlet articulated with the rod port
- 343: Oil inlet for safe lock-up
- 345: Second oil inlet for oil absorption
- 35: External pipe
- 36: Flat point set screw
- 4: Piston assembly
- 41: Piston
- 42: Piston rod
- 43: Rod port
- 43a: Rod port of the left hydraulic buffer
- 43b: Rod port of the right hydraulic buffer
- 44: Head port
- 44a: Head port of the left hydraulic buffer
- 44b: Head port of the right hydraulic buffer
- 5: Oil storage tank
- 5a: Oil storage tank of the left hydraulic buffer
- 5b: Oil storage tank of the right hydraulic buffer
- 61: The first check valve
- 61a: The first check valve of the left hydraulic buffer
- 61b: The first check valve of the right hydraulic buffer
- 62: The second check valve
- 62a: The second check valve of the left hydraulic buffer
- 62b: The second check valve of the right hydraulic buffer
- 63: The third check valve
- 63a: The third check valve of the left hydraulic buffer
- 63b: The third check valve of the right hydraulic buffer
- 64: The fourth check valve
- 64a: The fourth check valve of the left hydraulic buffer
- 64b: The fourth check valve of the right hydraulic buffer
- 71: Safety-relief valve
- 71a: Safety-relief valve of the left hydraulic buffer
- 71b: Safety-relief valve of the right hydraulic buffer
- 72: Overflow enhancement damping
- 72a: Overflow enhancement damping of the left hydraulic buffer
- 72b: Overflow enhancement damping of the right hydraulic buffer
- 72': Hydraulic enhancement damping
- 73: Basic solenoid valve
- 73a: Basic solenoid valve of the left hydraulic buffer
- 73b: Basic solenoid valve of the right hydraulic buffer
- 74: Basic hydraulic damping
- 74a: Basic hydraulic damping of the left hydraulic buffer
- 74b: Basic hydraulic damping of the right hydraulic buffer
- 75: Mechanical valve
- 75a: Mechanical valve of the left hydraulic buffer
- 75b: Mechanical valve of the right hydraulic buffer
- 751: Mechanical valve spring
- 752: Mechanical valve baffle
- 75': Solenoid valve
- 8: The left hydraulic buffer
- 9: The right hydraulic buffer

### Specific Embodiments

To describe the technology contents of the invention more clearly, further description is made below combining the specific embodiments.

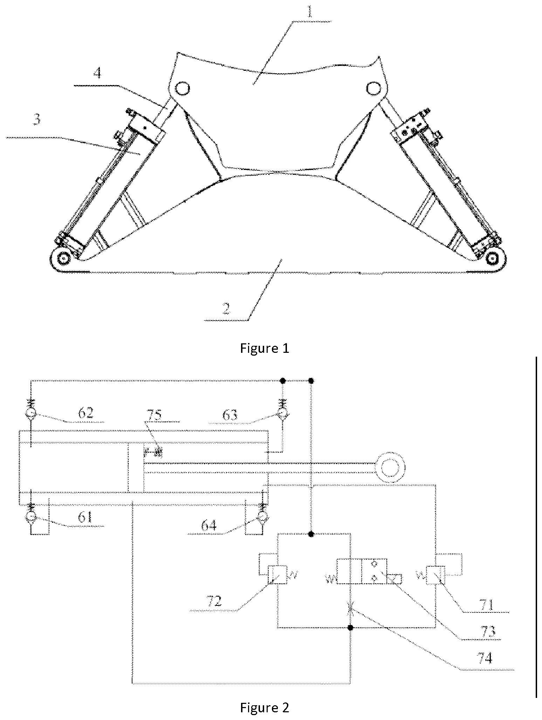

In one embodiment of the invention as is shown by Figure 1, a stepped damping buffer is connected to the left and right side between the front frame 1 and rear frame 2 of the articulated system respectively, and each stepped damping buffer comprises a hydraulic control oil circuit, a cylinder barrel assembly 3, a piston assembly 4 and an oil storage tank 5, where, the hydraulic control oil circuit, cylinder barrel assembly 3 and oil storage tank 5 are fixedly connected, and then connected with the rear frame 2 of the articulated system; piston assembly 4 is connected with the front frame 1 of the articulated system, piston assembly 4 is arranged in the cylinder barrel assembly 3, and can slide in the cylinder barrel assembly 3.

### 1) Constituent parts of the hydraulic control oil circuit

As is shown by Figure 2, it is the structure diagram of the hydraulic control oil circuit, which comprises a first check valve 61, a second check valve 62, a third check valves 63, a fourth check valve 64, a reversing assembly (the reversing assembly can either be the mechanical valve 75 or the solenoid valve 75', and in Figure 2, it is the mechanical valve 75), basic solenoid valve 73, safety-relief valve 71, overflow enhancement valve 72 (which can also be hydraulic enhancement damping 72', and in Figure 2, it is the overflow enhancement valve 72) and basic hydraulic damping 74, where:
The first check valve 61 is arranged between the oil storage tank 5 and the head port 44 of the cylinder barrel 31, serving as the first oil absorption circuit; the fourth check valve 64 is arranged between the rod port 43 of the cylinder barrel 31 and the oil storage tank 5, serving as the second oil absorption circuit; the second check valves 62 is arranged between the head port 44 of the cylinder barrel 31 and the pressure control oil circuit, serving as the first oil pressing circuit; the third check valves 63 is arranged between the rod port 43 of the cylinder barrel 31 and the pressure control oil circuit, serving as the second oil pressing circuit; the basic solenoid valve 73, overflow enhancement valve 72 and basic hydraulic damping 74 constitute the articulated damping pressure control oil circuit; the oil circuit between the articulated damping pressure control oil circuit and the oil storage tank 5 is served as the oil return circuit; the safety-relief valve 71is arranged between the rod port 43 and the oil return circuit, serving as the oil circuit for safe lock-up; and the reversing assembly is arranged in the second oil pressing circuit.

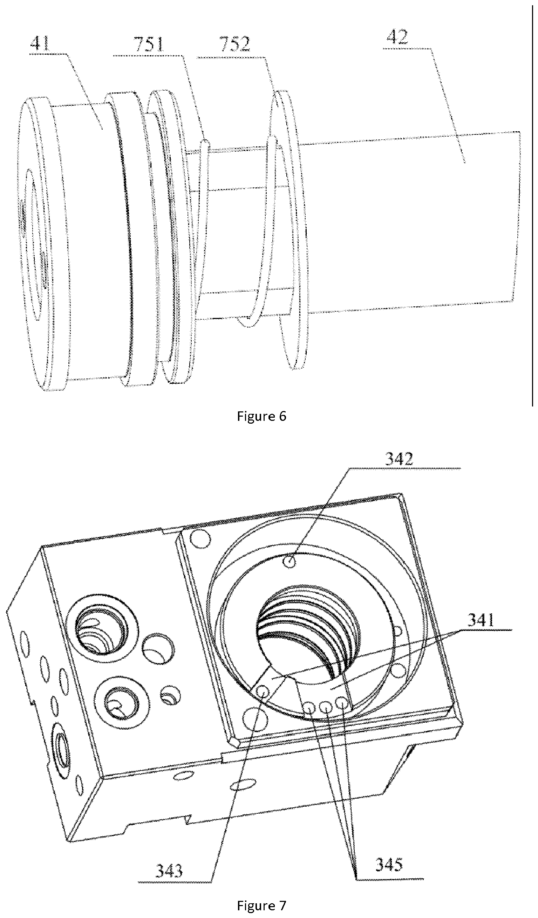

Besides, in a more preferred embodiment, the concrete structure of the above mechanical valve 75 is shown by Figure 6; the mechanical valve 75 comprises a mechanical valve spring 751 and a mechanical valve baffle 752, the first end of the mechanical valve spring 751 is fixed to the piston 41, the second end of the mechanical valve spring 751 is connected with the mechanical valve baffle 752, and both the mechanical valve spring 751 and mechanical valve baffle 752 are sheathed on the piston rod 42.

The specific composition of each oil circuit is shown below:
① The first check valve 61is arranged between the oil storage tank 5 and the head port 44, serving as the first oil absorption circuit;
② The fourth check valve 64 is arranged between the oil storage tank 5 and the rod port 43, serving as the second oil absorption circuit;
③ The second check valves 62 is arranged between the head port 44 and the articulated damping pressure control oil circuit, serving as the first oil pressing circuit;
④ The third check valves 63 is arranged between the rod port 43 and the articulated damping pressure control oil circuit, serving as the second oil pressing circuit;
⑤ The basic hydraulic damping7 4 is connected with the basic solenoid valve 73 in series, composing basic damping oil circuit;
⑥ Under normal conditions, the overflow enhancement damping 72 is set higher than the basic hydraulic damping 74, opening pressure that is lower than the safety-relief valve 71 is served as the oil circuit for enhancing damping;
⑦ After the basic damping oil circuit is connected with the boost control oil circuit in parallel, articulated damping pressure control oil circuit is formed;
⑧ The safety-relief valve 71 is set with relatively higher opening pressure, and connected between the rod port 43 and the oil return circuit, serving as the oil circuit for safe lock-up.

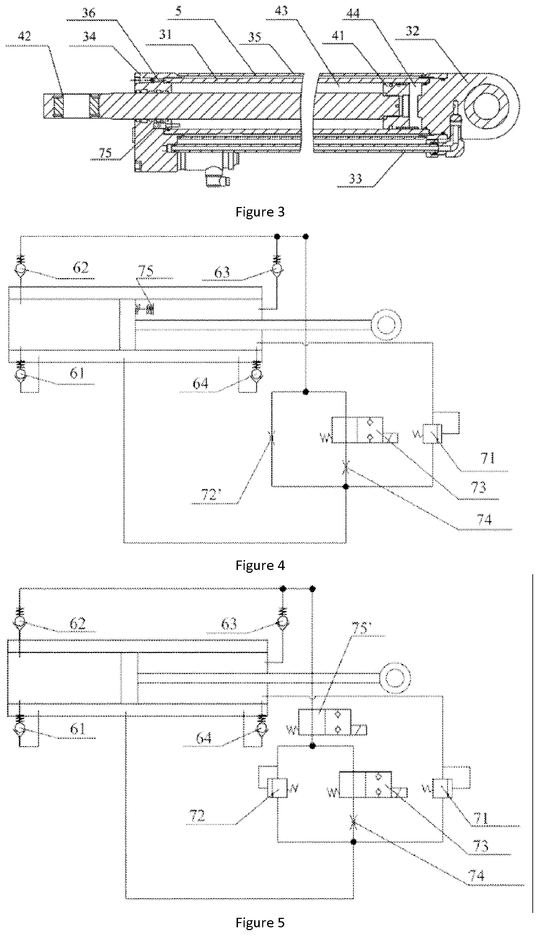

Besides, as is shown by Figure 4, the overflow enhancement damping 72 can be replaced by hydraulic enhancement damping 72'; as is as is shown by Figure 5, it is the structure diagram where the reversing assembly is solenoid valve 75'.

### 2) Constituent parts of cylinder barrel assembly 3

As is shown by Figure 3, the cylinder barrel assembly 3 comprises the welding FRL, cylinder barrel 31, rear end cover 32, pressing pipe 33 and related cylinder barrel sealing elements.

Where, the welding FRL comprises the manifold block 34, external pipe 25 and flange in sequence, and all the components and parts of the pressure control oil circuit are integrated in the manifold block 34 of the welding FRL; the cylinder barrel 31 is arranged in the welding FRL, which cooperates and contacts with the manifold block 34 in the welding FRL, one end of which is sealed with the cylinder barrel sealing element; the rear end cover 32 is arranged at the other end of the cylinder barrel 31 and the welding FRL, sealing the other end of the cylinder barrel 31 and welding FRL with the cylinder barrel sealing element; the manifold block 34 of the welding FRL is arranged a flat point set screw 36, compressing the cylinder barrel 31 in the welding FRL, so as to avoid the cylinder barrel 31 from moving axially between the manifold block 34 and the rear end cover 32; the pressing pipe 33 is arranged between the rear end cover 32 and the manifold block 34 of the welding FRL, realizing the connection between the first oil pressing circuit and the pressure control oil circuit in the manifold block 34; the circular sealing area between the cylinder barrel 31 and the external pipe 25 of the welding FRL forms oil storage tank 5.

Besides, as is shown by Figure 7, when the reversing assembly is mechanical valve 75, the manifold block 34 is further arranged with an oil passing groove 341 and oil inlet 342 articulated with the rod port, interior of the oil passing groove 341 is opened with an oil inlet 343 for safe lock-up and second oil inlets 345 for oil absorption.

### 3) Constituent parts of piston assembly 4

As is shown by Figure 3, piston assembly 4 comprises a piston 41, a piston rod 42 as well as the related piston rod sealing elements.

Where, the piston 41 is arranged in the cylinder barrel 31, separating the cylinder barrel 31 into two chambers through the sealing element of the piston rod 42; the piston rod 42 passes through the manifold block 34 in the welding FRL and connects with the piston 41 in the cylinder barrel; in the two chambers of the cylinder barrel 31 separated by the piston 41, the chamber where the piston rod 42 passes through is known as the rod port 43, while the chamber without piston rod 42 is known as head port 44.

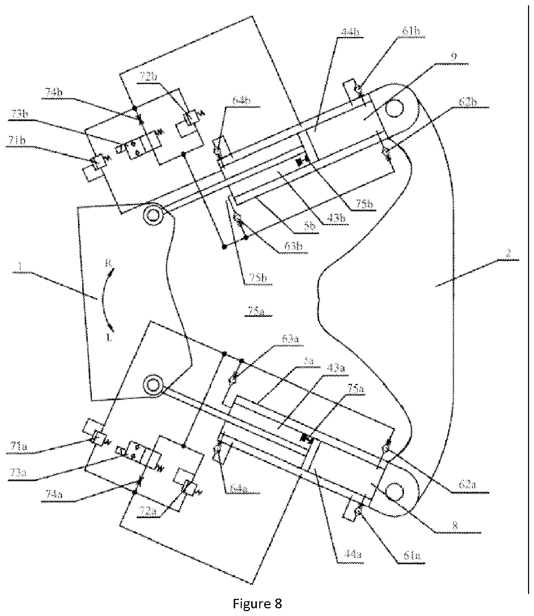

Further description is made below combining Figure 1 to Figure 8:
After being started, the basic solenoid valve of the vehicle is energized; take the right turn of the vehicle as an example, the front carriage and rear carriage will drive the front frame and rear frame to make relative rotation, and the piston assembly of the left hydraulic buffer will rotate with the front frame, sliding towards and stretching out of the rod port in the cylinder barrel; the piston assembly of the right hydraulic buffer rotates with the front frame, sliding and retracting towards the head port in the cylinder barrel.

Under such circumstance, for the left hydraulic buffer, volume of the rod port shrinks, compressing the hydraulic oil in the rod port to flow to the articulated damping pressure control oil circuit via the second oil discharge circuit for pressure control, producing pressure value, then flows back to the oil storage tank; the pressure produced by the rod port will act on the piston, relieving the piston from sliding towards the rod port, namely relieving the articulated system from rotating rightwards, relieving the vehicle from rotating rightwards; during this process, when the turning angle is 0°∼48°, the basic solenoid valve will be energized, staying in the connected state, the articulated damping pressure is produced by the basic hydraulic damping, and the damping pressure numerical value produced is directly proportional to the hydraulic oil flow passing through the hydraulic damping, namely directly proportional to the linear speed stretched out by the piston rod; when the turning angle reaches 48°∼51°, the proximity switch is triggered, the electric control system of the vehicle gives out signal, enabling the basic solenoid valve to suffer power failure and stay in the closed state, articulated damping pressure is produced by the overflow enhancement damping, and basically constant damping pressure numerical value is produced; when the turning angle reaches 51°∼54°, the basic solenoid valve maintains the power failure state; meanwhile, the mechanical valve slides to the manifold block end along with the piston, blocking the rod port oil inlet of the articulated damping pressure control oil circuit, the safety lock-up pressure of the rod port is set by the safety-relief valve; when the piston slides in the cylinder barrel towards the rod port, volume of the head port increases, absorbing oil from the oil storage tank through the first oil absorption circuit after negative pressure is produced, enabling the chamber to be full of hydraulic oil.

For the right hydraulic buffer, when the turning angle is 0°∼38.6°, the piston rod retracts, the basic solenoid valve is energized and in the connected state, articulated damping pressure is produced by hydraulic damping, the numerical value of the damping pressure produced is directly proportional to the hydraulic oil flow passing through the basic hydraulic damping, namely directly proportional to the linear speed of the piston rod when retracting; when the turning angle is 38.6°, axis of the piston rod passes through the gyration center between the front frame and rear frame of the articulated system, the piston rod retracts to the shortest position, then, both the damping force and moment arm of the right hydraulic buffer shall be 0; when the turning angle is 38.6°∼48°, the basic solenoid valve is energized and in the connected state, the right hydraulic buffer piston rod stretches out, articulated damping pressure is produced by the basic hydraulic damping; when the turning angle reaches 48°∼51°, the proximity switch is triggered, the electric control system of the vehicle gives out signal, enabling the basic solenoid valve to power off and in the closed state, articulated damping pressure is produced by the overflow enhancement damping, thus, the basically constant damping pressure numerical value is produced; when the turning angle reaches 51°∼54°, the proximity switch continues to stay at the triggering state, the basic solenoid valve continues to black out and in the closed state, articulated damping pressure of the right hydraulic buffer is produced by the overflow enhancement damping, which provides enhanced damping. Besides, when the driving speed of the vehicle reaches 60km/h, the driver brakes or presses the emergency switchover button, the electric control system of the vehicle will receive the corresponding travel speed upper limit trigger signal, braking signal or trigger signal of the emergency switchover button, and send signal to the hydraulic buffer of the articulated system, the basic solenoid valve will lose power, and the hydraulic buffer will be in the state of enhancing damping.

In the process of turning right of the vehicle, both the left and right hydraulic buffer will provide buffer damping force for the articulated system, the articulated system will gain the damping torque that is opposite to the vehicle turning direction, so as to relieve the vehicle turning trend. When the vehicle makes a turn, the left and right hydraulic buffer of the articulated system will correspond to a moment arm value at any position. When the turning angle is 38.6°, one hydraulic buffer will retract to the shortest length, and the total moment arm of the hydraulic buffer will decrease progressively between 0° and 38.6°, while with the increase of the vehicle turning angle, damping torque required to be provided also increases, achieving the purpose of increasing amping torque by enhancing damping and safety lock-up.

When the vehicle finishes turning right and starts to gyre, the vehicle will gyre from the real-time turning angle gradually to the state of going straight ahead.

Under such circumstance, the motion state of the left and right hydraulic buffer is contrary to that of making a turn; when the vehicle gyres at the turning angle of 0°~38.6°, basic damping of the articulated system is provided by the left hydraulic buffer retracting and provided by the right hydraulic buffer stretching out; when the vehicle gyres at the turning angle of 38.6°∼48°, basic damping is provided by both the left and right hydraulic buffer retracting; when the vehicle gyres at the turning angle of 48°∼51°, the left hydraulic buffer retracts, providing basic damping, and the right hydraulic buffer also retracts, providing basic damping; when the vehicle gyres at the turning angle of 51°~54°, the left hydraulic buffer retracts, providing basic damping, and the right hydraulic buffer also retracts, providing basic damping

When the vehicle gyres after making a turn, the hydraulic buffers only provide basic damping, rather than enhancing the damping force when making a turn, the purpose thereof is to enable the vehicle to gyre to the state of going straight ahead lightly and quickly, and avoid towing and other dangers. It should be pointed out that, when the vehicle gyres at the turning angle of 0°∼48°, the electric control system of the vehicle keeps supplying power for the basic solenoid valves of the hydraulic buffers, and the hydraulic buffers provide basic damping ; while the circumstance that the turning angle of the vehicle is above 48° will only occur when the vehicle reverses, if the electric control system of the vehicle receives the trigger signal of the proximity switch and reversing signal simultaneously, the electric control system of the vehicle will send out signal, and the basic solenoid valve of the hydraulic buffer will lose power; if the electric control system of the vehicle only receives the trigger signal of the proximity switch, rather than the reversing signal, keep the basic solenoid valve of the hydraulic buffer energized, so as to achieve the purpose of the light and quick rotation.

When the electric control system of the vehicle suffers power failure due to vehicle failure, hydraulic buffers will provide enhanced damping, enabling the vehicle to drive back to the repair shop safely; when the electric control system suffers power failure due to vehicle accident, the articulated system will stay at the enhanced damping state, keeping the vehicle at the shape of accident, avoiding greater damage.

When the vehicle turns left, the left hydraulic buffer retracts, and the right hydraulic buffer stretches out, which is the same operating principle.

It shall be understood that, the angle in the above content, such as "0∼48°" and "51°" can be numerical values of other angles, rather than only the specific angle numerical value.

A hydraulic buffer realizing safe gyration of vehicles based on the articulated system and its method in the invention are adopted; when the vehicle is making a turn, damping torque will increase with the increase of angle or speed of the vehicle, according to the vehicle's requirement for buffer damping, assuring that the vehicle will not drift during the drive; after a turn is made and the vehicle is required to gyre and go straight ahead, the hydraulic buffer will increase the damping torque gradually with the decrease of angle or speed of the vehicle, so that the vehicle can gyre lightly and quickly, enabling the vehicle to avoid towing after making a turn and during the gyration, as well as drifting after set right; meanwhile, when there is a traffic accident, the vehicle can maintain the shape of accident, avoiding greater damage; and compared with the existing technology, it is more secure, and drivers will feel more comfortable during the driving.

Besides, when the piston rod in the rod port of the hydraulic buffer stretches out for a certain length, the mechanical valve baffle will block the oil inlet articulated with the rod port on the manifold block, the hydraulic oil can enter the oil inlet for safe lock-up and the second oil inlet for oil absorption via the oil groove; therefore, when the vehicle makes a turn and reaches a certain angle, damping force of the hydraulic buffer whose rod port is compressed is provided by the oil circuit for safe lock-up.

Meanwhile, since the articulated damping pressure control oil circuit adopts hydraulic damping rather than overflow valve as the ordinary state, and overflow valve as the pressurization state, hydraulic damping is in the pressurization state. Such configuration has made full utilization of the characteristic that differential pressure produced by hydraulic damping is directly proportional to the excess flow of hydraulic oil, namely, under the normal state, articulated damping is directly proportional to vehicle turn rate; when damping is required to be enhanced within the relatively small rotation angle, raise the damping pressure to a higher and relatively constant value; therefore, hydraulic damping and overflow valve, rather than proportional overflow valve (or proportional pressure-reducing valve) is applied to gain damping pressure; thus, fabricating cost of hydraulic buffer as well as the complexity of electric control are reduced. Besides, the articulated damping pressure control oil circuit adopts the form of parallel connection of overflow valve and hydraulic damping. The overflow valve is connected with the hydraulic damping in parallel; when the oil circuit suffers hydraulic shock, and pressure increases suddenly, the overflow valve can be opened to relieve pressure, pressure shock can be reduced; meanwhile, noise produced due to excessive instant excess flow of hydraulic damping can be reduced.

In this specification, descriptions are made by referring to the specific embodiments of the invention. However, various modifications and transformations can still be made, without going against the spirit and scope of the invention. Therefore, this specification and the figures thereof can be considered as illustrative, rather than restrictive.

## Claims

1. A hydraulic buffer realizing safe gyration of vehicles based on the articulated system, the said hydraulic buffer comprises a piston assembly, a cylinder barrel assembly and an oil storage tank; the said piston assembly is arranged in the said cylinder barrel assembly, and the said piston assembly separates the corresponding cylinder barrel into rod port and head port, featuring that, the said hydraulic buffer further comprises a hydraulic control oil circuit, the said cylinder barrel assembly, the said hydraulic control oil circuit and the said oil storage tank are fixedly connected in sequence, and the said hydraulic control oil circuit comprises a first oil absorption circuit, a second oil absorption circuit, a first oil pressing circuit, a second oil pressing circuit, a basic damping oil circuit, an oil circuit for enhancing damping, an oil circuit for safe lock-up and a reversing assembly, where:
The said basic damping oil circuit and the boost control oil circuit are connected in parallel, constituting articulated damping pressure control oil circuit;
The said first oil absorption circuit is arranged between the said oil storage tank and the said head port;
The said second oil absorption circuit is arranged between the said oil storage tank and the said rod port;
The said first oil pressing circuit is arranged between the said head port and the said articulated damping pressure control oil circuit;
The said second oil pressing circuit is arranged between the said rod port and the said articulated damping pressure control oil circuit;
An oil return circuit is arranged between the said articulated damping pressure control oil circuit and the said oil storage tank;
The said oil circuit for safe lock-up is arranged between the said rod port and the said oil return circuit;
The said reversing assembly is arranged in the said second oil pressing circuit.

2. As stated in Claim 1, the said hydraulic buffer realizing safe gyration of vehicles based on the articulated system features that, the said reversing assembly is a mechanical valve, and the said mechanical valve is arranged on the said piston assembly.

3. As stated in Claim 2, the said hydraulic buffer realizing safe gyration of vehicles based on the articulated system features that, the said piston assembly comprises a piston and a piston rod; the said mechanical valve comprises a mechanical valve spring and a mechanical valve baffle; the first end of the said mechanical valve spring is fixed to the said piston, the second end of the said mechanical valve spring is connected with the said mechanical valve baffle, and both the said mechanical valve spring and the mechanical valve baffle are sheathed on the said piston rod.

4. As stated in Claim 3, the said hydraulic buffer realizing safe gyration of vehicles based on the articulated system features that, the said cylinder barrel assembly comprises a manifold block, the said articulated damping pressure control oil circuit, second oil absorption circuit, second oil pressing circuit and oil circuit for safe lock-up are integrated in the said manifold block; the said manifold block is further arranged with an oil passing groove and an oil inlet articulated with the rod port, and interior of the said oil passing groove is opened with an oil inlet for safe lock-up and second oil inlets for oil absorption.

5. As stated in Claim 1, the said hydraulic buffer realizing safe gyration of vehicles based on the articulated system features that, the said first oil absorption circuit comprises a first check valve, the said second oil absorption circuit comprises a fourth check valve, the said first oil pressing circuit comprises a second check valve, and the said second oil pressing circuit comprises a third check valves.

6. As stated in Claim 5, the said hydraulic buffer realizing safe gyration of vehicles based on the articulated system features that, the said reversing assembly is a solenoid valve, and the said solenoid valve is arranged between the said third check valve and the said articulated damping pressure control oil circuit.

7. As stated in Claim 2 or 6, the said hydraulic buffer realizing safe gyration of vehicles based on the articulated system features that, the said basic damping oil circuit comprises basic hydraulic damping and basic solenoid valve, the said boost control oil circuit comprises an overflow enhancement damping or a hydraulic enhancement damping, and the said oil circuit for safe lock-up comprises a safety-relief valve.

8. As stated in Claim 7, the said hydraulic buffer realizing safe gyration of vehicles based on the articulated system features that, the said articulated system comprises a proximity switch, a front frame and a rear frame; the said proximity switch is arranged between the said front frame and the said rear frame, the said proximity switch is connected with the electric control system of the said articulated vehicle; and the said electric control system of the vehicle is used for sending basic solenoid valve control instruction to the said articulated system according to the trigger signal sent by the said proximity switch.

9. A method of enabling the articulated vehicle to gyre safely through any one of the said hydraulic buffer in Claim 1-Claim 6, features that, the articulated system comprises a proximity switch, a front frame and a rear frame; the said proximity switch is arranged between the said front frame and the said rear frame, the said proximity switch is connected with the electric control system of the said articulated vehicle, and the said basic damping oil circuit comprises basic hydraulic damping and basic solenoid valve, the said method comprises the following steps:
(1) The said articulated system judges whether the said articulated vehicle is in the state of making a turn or gyring, if it is in the state of making a turn, continue Step (2); if it is in the state of gyring, continue Step (5);
(2) The said electric control system of the vehicle judges whether trigger signal of the said proximity switch is received, if so, continue Step (3); otherwise, continue Step (2);
(3) The said electric control system of the vehicle sends basic solenoid valve control instruction to the said articulated system;
(4) The said articulated system controls the said basic solenoid valve to disconnect, and return to the above Step (1);
(5) The said articulated system judges whether the turning angle of the articulated vehicles falls within the first setting angle, if so, continue Step (6); otherwise, continue Step (7);
(6) The said electric control system of the vehicle maintains the connected state of the said basic solenoid valve, and the said hydraulic buffer provides basic damping;
(7) The said electric control system of the vehicle judges whether to send the basic solenoid valve control instruction to the said articulated system, if so, continue Step (8); otherwise, continue Step (10);
(8) The said electric control system of the vehicle sends basic solenoid valve control instruction to the said articulated system;
(9) The said articulated system controls the said basic solenoid valve to disconnect, and return to the above Step (1);
(10) The said electric control system of the vehicle maintains the connected state of the said basic solenoid valve.

10. As stated in Claim 9, the method of enabling the articulated vehicle to gyre safely by the hydraulic buffer features that, the said electric control system of the vehicle judges whether to send the basic solenoid valve control instruction to the said articulated system, specifically: The said electric control system of the vehicle judges whether trigger signal and reversing signal of the said proximity switch are received, if so, the said electric control system of the vehicle determines to send the said basic solenoid valve control instruction to the said articulated system; otherwise, the said electric control system of the vehicle will determine not to send basic solenoid valve control instruction to the said articulated system.

11. As stated in Claim 9, the method of enabling the articulated vehicle to gyre safely by the hydraulic buffer features that, the said electric control system of the vehicle judges whether to send the basic solenoid valve control instruction to the said articulated system, specifically: The said electric control system of the vehicle judges whether any one of the braking signal, travel speed upper limit trigger signal or emergency switch button trigger signal is received, if so, the said electric control system of the vehicle determines to send the said basic solenoid valve control instruction to the said articulated system; otherwise, the said electric control system of the vehicle will determine not to send basic solenoid valve control instruction to the said articulated system.
